# EUROPEAN PATENT SPECIFICATION

(11) **EP 2 761 823 B1**
(45) Date of publication and mention of the grant of the patent: **22.11.2017**
(21) Application number: 12834989.1
(22) Date of filing: 03.08.2012
(51) Int. Cl.: H04L 12/58, H04L 9/32, H04W 12/06, G06F 21/32, H04L 29/06, H04L 9/08

(54) **METHODS AND APPARATUSES FOR ELECTRONIC MESSAGE AUTHENTICATION**
VERFAHREN UND VORRICHTUNGEN ZUR AUTHENTIFIZIERUNG ELEKTRONISCHER NACHRICHTEN
PROCÉDÉS ET APPAREILS D'AUTHENTIFICATION DE MESSAGE ÉLECTRONIQUE

(30) Priority: 30.09.2011 IN CH34042011
(43) Date of publication of application: 06.08.2014
(73) Proprietor: Nokia Technologies Oy, 02610 Espoo (FI)
(72) Inventor: ULIYAR, Mithun, Karnataka State Bangalore 560061 (IN); S V, Basavaraja, Karnataka State Bangalore 56003 (IN)
(74) Representative: Berggren Oy, Tampere
(86) International application number: PCT/FI2012/050764
(87) International publication number: WO 2013/045746

(56) References cited:
- WO-A1-2009/129134
- WO-A2-2007/127188
- US-A1- 2002 116 508
- US-A1- 2008 301 800
- US-A1- 2011 238 990
- US-B1- 7 991 388

## Description

### TECHNOLOGICAL FIELD

Embodiments of the present invention relate generally to facial detection technology and, more particularly, relate to a method, apparatus, and computer program product for facilitating the authentication of a message recipient using facial detection.

### BACKGROUND

Currently electronic messages, such as electronic mail and text messages, are transmitted by a sender without the ability to ensure that only the intended recipient receives and/or views the message. In some cases, important messages may be addressed to the wrong person or may be sent to a recipient with a compromised inbox. In some instances the recipient is not even aware that their individual mailbox has been compromised. In these situations personal and/or private information may be distributed to the public and/or to wrong recipients in instances in which it was not intended.

US20110238990 discloses an interactive information dissemination system including a media server for receiving a plurality of media elements and storing the media elements in a database. A sender client enables a first user to identify message data, a recipient identifier, and a media element from the database of media elements. A recipient client presents the media element to a second user associated with the recipient identifier. The recipient client further presents the message data to the second user when the second user performs a predetermined action, such as submitting authentication information or requesting the message data, to receive the message data. The message data may be secured by requiring sender and recipient authentication, and by encoding the data using a private encoding key and data package identifier managed by a main server and a key server.

US2002116508 discloses a method for secure transmission of data, like e-mail and other secure documents, over a computer network including the use of biometrics to verify that the sender of the data is confirmed as an individual authorized for secure access transmission of data over the network and by verifying that the recipient of the data is also an individual authorized to receive data by secure access transmission over the network. The transmission of counterfeit messages is prevented by confirming the identity of the sender as an individual authorized for secure access transmission over the network by scanning a predetermined biometric of the sender, and comparing the biometric of the sender with predetermined biometric of all individuals who are authorized for secure access transmission over the network. The recipient of a secure access message is not permitted to access the message until recipient's identity has been similarly confirmed as an individual authorized to receive messages secure access transmitted over the network. Once the recipient's identity is confirmed the message may be opened. The sender will receive confirmation by return electronic mail that the message has been opened by the authorized recipient.
WO 2009129134 discloses a method for comprising combining following: biometrics (initially a registered fingerprint scan), a separate and secure network and infrastructure, an email management system and additional email message format options WO 2009129134 provides: 1) sender and recipient identity verification, 2) security and privacy, 3) proof of delivery and 4) effectiveness in communications during the exchange of certified email messages and attachments. Communication is based on the ability to use any combination of text, audio and visual (video) email message formats in an integrated, coordinated process of communication with another email recipient.

### BRIEF SUMMARY

The present invention relates to a methods as claimed in claims 1 and 7, a corresponding apparatus as claimed in claim 10, and a corresponding computer program code as claimed in claim 11. Preferred embodiments are defined in the dependent claims. Methods, apparatuses, and computer program products are herein provided for facilitating the authentication of a recipient of an electronic message using facial detection. In one embodiment, an image of an intended recipient of an electronic message may be located and/or verified in an instance in which the message is transmitted. Then, prior to allowing the message to be viewed and/or accessed by a user, an image is captured of the user that is attempting to view and/or access the message. Based on the comparison between the image of the intended recipient and the captured image, systems, methods, apparatuses, and computer program products in accordance with various embodiments disclosed herein may determine whether there is a match between the two images. In instances in which there is a match, then the user is determined to be the intended recipient and thus may view the message.
One example method may include receiving a message. The message may include a plurality of encoded facial features that identify a message recipient. The method may further include causing an image to be captured of the message recipient in an instance in which the message is accessed. The method may also include authenticating the message recipient based on the captured image and the received plurality of encoded features provided with the received message.
In another embodiment, an apparatus comprising a processor and a memory comprising software, the memory and the software configured to, with the processor, cause the apparatus to at least receive a message, wherein the message includes an a plurality of encoded facial features that identify a message recipient. The apparatus is further caused to cause an image to be captured of the message recipient in an instance in which the received message is accessed. The apparatus is further caused to authenticate the message recipient based on the captured image and the received plurality of encoded features provided with the received message.
In a further embodiment, a computer program product comprising at least one computer readable non-transitory memory having program code stored thereon, the program code which when executed by an apparatus cause the apparatus at least to: cause an image of a recipient of an electronic message to be located. A computer program product also comprises program code that is further configured to encode a plurality of facial features that identify the recipient from the image of the recipient. A computer program product also comprises program code that is further configured to cause the plurality of encoded facial features to be made available in an instance in which the electronic message is transmitted to the recipient, wherein the plurality of encoded facial features enables authentication of the recipient.

One example apparatus may comprise means for receiving a message, wherein the message includes a plurality of encoded facial features that identify a message recipient. An apparatus may also comprise means for causing an image to be captured of the message recipient in an instance in which the received message is accessed. An apparatus may also comprise means for authenticating the message recipient based on the captured image and the received plurality of encoded features provided with the received message.

One example method may comprise causing an image of a recipient of an electronic message to be located. The method may also comprise encoding a plurality of facial features that identify the recipient from the image of the recipient. The method may also comprise causing the plurality of encoded facial features to be made available in an instance in which the electronic message is transmitted to the recipient, wherein the plurality of encoded facial features enables authentication of the recipient.

In another embodiment, an apparatus comprising a processor and a memory comprising software, the memory and the software configured to, with the processor, cause the apparatus to at least cause an image of a recipient of an electronic message to be located. The apparatus is further caused to encode a plurality of facial features that identify the recipient from the image of the recipient. The apparatus is further caused to cause the plurality of encoded facial features to be made available in an instance in which the electronic message is transmitted to the recipient, wherein the plurality of encoded facial features enables authentication of the recipient.

In a further embodiment, a computer program product comprising at least one computer readable non-transitory memory having program code stored thereon, the program code which when executed by an apparatus cause the apparatus at least to receive a message, wherein the message includes an a plurality of encoded facial features that identify a message recipient. A computer program product also comprises program code that is further configured to cause an image to be captured of the message recipient in an instance in which the received message is accessed. A computer program product also comprises program code that is further configured to authenticate the message recipient based on the captured image and the received plurality of encoded features provided with the received message.

One example apparatus may comprise means for causing an image of a recipient of an electronic message to be located. An apparatus may also comprise means for encoding a plurality of facial features that identify the recipient from the image of the recipient. An apparatus may also comprise means for causing the plurality of encoded facial features to be made available in an instance in which the electronic message is transmitted to the recipient, wherein the plurality of encoded facial features enables authentication of the recipient.

One example method may comprise receiving an indication of a recipient of an electronic message from a first mobile terminal, wherein the indication includes at least one of an image or a name. The method may also comprise receiving a captured image of the recipient from a second mobile terminal. The method may also comprise causing a decryption key for the electronic message to be transmitted to the second mobile terminal in an instance in which the received indication of a recipient and the captured image of the recipient enables authentication.

In another embodiment, an apparatus comprising a processor and a memory comprising software, the memory and the software configured to, with the processor, cause the apparatus to at least receive an indication of a recipient of an electronic message from a first mobile terminal, wherein the indication includes at least one of an image or a name. The apparatus is further caused to receive a captured image of the recipient from a second mobile terminal. The apparatus is further caused to cause a decryption key for the electronic message to be transmitted to the second mobile terminal in an instance in which the received indication of a recipient and the captured image of the recipient enables authentication.

In a further embodiment, a computer program product comprising at least one computer readable non-transitory memory having program code stored thereon, the program code which when executed by an apparatus cause the apparatus at least to receive an indication of a recipient of an electronic message from a first mobile terminal, wherein the indication includes at least one of an image or a name. A computer program product also comprises program code that is further configured to receive a captured image of the recipient from a second mobile terminal. A computer program product also comprises program code that is further configured to cause a decryption key for the electronic message to be transmitted to the second mobile terminal in an instance in which the received indication of a recipient and the captured image of the recipient enables authentication.

One example apparatus may comprise means for receiving an indication of a recipient of an electronic message from a first mobile terminal, wherein the indication includes at least one of an image or a name. An apparatus may also comprise means for receiving a captured image of the recipient from a second mobile terminal. An apparatus may also comprise means for causing a decryption key for the electronic message to be transmitted to the second mobile terminal in an instance in which the received indication of a recipient and the captured image of the recipient enables authentication.

### BRIEF DESCRIPTION OF THE DRAWING(S)

Having thus described embodiments of the invention in general terms, reference will now be made to the accompanying drawings, which are not necessarily drawn to scale, and wherein:
FIG. 1 illustrates an example block diagram of an example facial detection apparatus for performing message recipient authentication according to an example embodiment of the present invention;
FIG. 2 is a schematic block diagram of an example mobile terminal according to an example embodiment of the present invention;
FIG. 3 illustrates a system for performing example recipient authentication according to an example embodiment of the invention;
FIG. 4 illustrates a flowchart according to an example method for performing recipient authentication at a recipient device according to an example embodiment of the invention;
FIG. 5 illustrates a flowchart according to an example method for performing recipient authentication at a recipient device according to an example embodiment of the invention; and
FIG. 6 illustrates a flowchart according to an example method for performing recipient authentication at a recipient device according to an example embodiment of the invention.

### DETAILED DESCRIPTION

Example embodiments will now be described more fully hereinafter with reference to the accompanying drawings, in which some, but not all embodiments are shown. Indeed, the embodiments may take many different forms and should not be construed as limited to the embodiments set forth herein; rather, these embodiments are provided so that this disclosure will satisfy applicable legal requirements. Like reference numerals refer to like elements throughout. The terms "data," "content," "information," and similar terms may be used interchangeably, according to some example embodiments, to refer to data capable of being transmitted, received, operated on, and/or stored. Moreover, the term "exemplary", as may be used herein, is not provided to convey any qualitative assessment, but instead merely to convey an illustration of an example. Thus, use of any such terms should not be taken to limit the scope of embodiments of the present invention.

As used herein, the term "circuitry" refers to all of the following: (a) hardware-only circuit implementations (such as implementations in only analog and/or digital circuitry); (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and (c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or application specific integrated circuit for a mobile phone or a similar integrated circuit in a server, a cellular network device, or other network device.

As described herein example message recipient authentication systems and methods using facial detection are disclosed. In one embodiment, a sender identifies one or more message recipients. In some example embodiments, once a recipient is identified, the most recent image of the identified recipient is located, thus allowing an encoded image of the recipient to be provided for message recipient authentication at a recipients mobile device and/or at a remote service (e.g. cloud computing system, remote server and/or the like).

In an embodiment and in an instance in which a user attempts to access the message, the systems and methods as described herein may be configured to cause an image to be captured of the user who is attempting to access the message. The received image and the captured image may then be compared to determine whether the user who is attempting to access the message is indeed an intended recipient. In instances in which the user that is attempting to access the message is authenticated as an intended recipient, then the message is opened and/or is made accessible. Otherwise the message remains locked, inaccessible and/or blocked from view until the user can be authenticated.

In alternate embodiments, a recipient's image captured during message authentication may be used to modify the message in some way. For example, a message may change colors, fonts, content, and/or the like based on the identity of the user attempting to access the message.

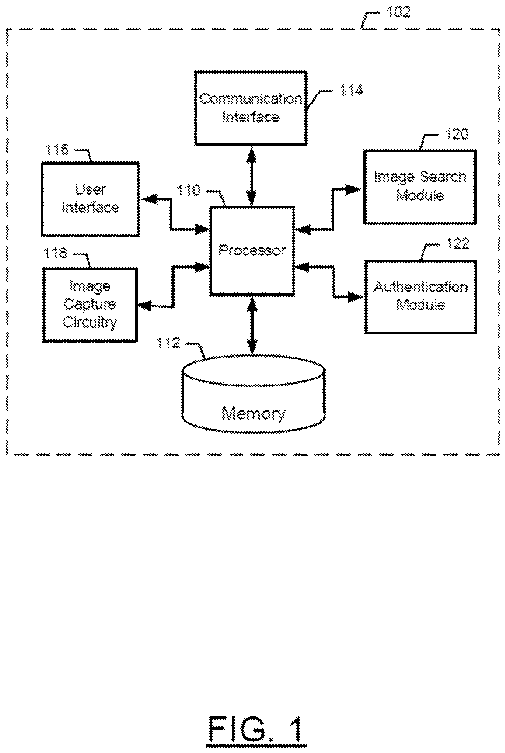

FIG. 1 illustrates a block diagram of a facial detection apparatus 102 for authenticating an electronic message recipient according to an example embodiment of the present invention. It will be appreciated that the facial detection apparatus 102 is provided as an example of one embodiment of the invention and should not be construed to narrow the scope of the invention in any way. In this regard, the scope of the disclosure encompasses many potential embodiments in addition to those illustrated and described herein. As such, while FIG. 1 illustrates one example of a configuration of an apparatus for performing message recipient authentication using face detection other configurations may also be used to implement embodiments of the present invention.

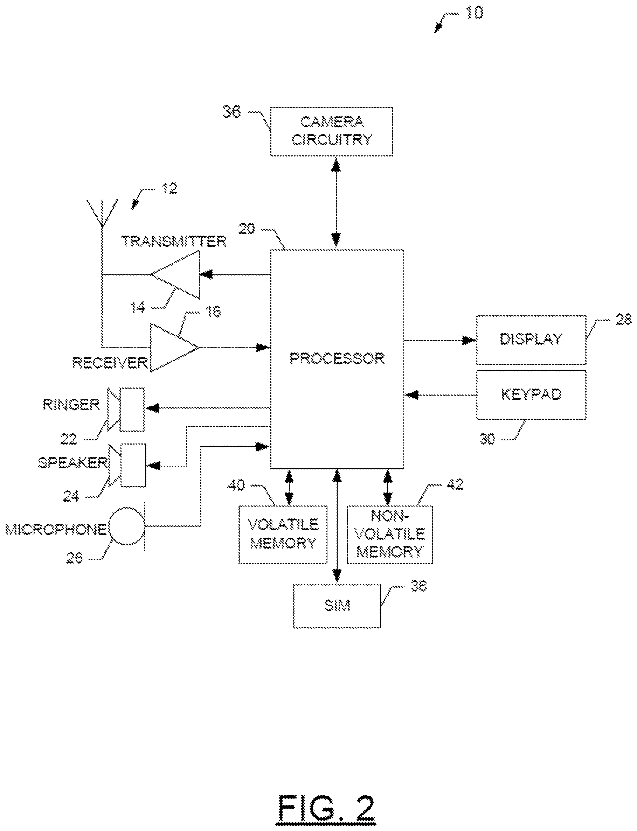

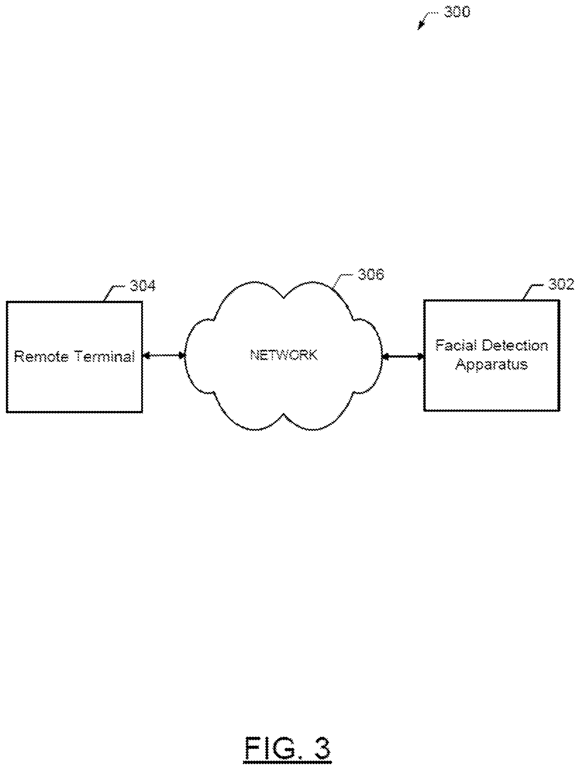

The facial detection apparatus 102 may be embodied as a desktop computer, laptop computer, mobile terminal, mobile computer, tablet, mobile phone, mobile communication device, one or more servers, one or more network nodes, game device, digital camera/camcorder, audio/video player, television device, radio receiver, digital video recorder, positioning device, any combination thereof, and/or the like. In an example embodiment, the facial detection apparatus 102 may be embodied as a mobile terminal, such as that illustrated in FIG. 2. Additionally, or alternatively the facial detection apparatus 102 may be embodied as a remote server, remote network node and/or the like remote from the mobile terminal, such as that illustrated in FIG. 3.

In this regard, FIG. 2 illustrates a block diagram of a mobile terminal 10 representative of one embodiment of a facial detection apparatus 102. It should be understood, however, that the mobile terminal 10 illustrated and hereinafter described is merely illustrative of one type of facial detection apparatus 102 that may implement and/or benefit from embodiments of the present invention and, therefore, should not be taken to limit the scope of the present invention. While several embodiments of the mobile terminal (*e.g.*, mobile terminal 10) are illustrated and will be hereinafter described for purposes of example, other types of mobile terminals, such as mobile telephones, mobile computers, portable digital assistants (PDAs), pagers, laptop computers, desktop computers, gaming devices, televisions, and other types of electronic systems, may employ embodiments of the present invention.

As shown, the mobile terminal 10 may include an antenna 12 (or multiple antennas 12) in communication with a transmitter 14 and a receiver 16. The mobile terminal 10 may also include a processor 20 configured to provide signals to and receive signals from the transmitter and receiver, respectively. The processor 20 may, for example, be embodied as various means including circuitry, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in FIG. 2 as a single processor, in some embodiments the processor 20 comprises a plurality of processors. These signals sent and received by the processor 20 may include signaling information in accordance with an air interface standard of an applicable cellular system, and/or any number of different wireline or wireless networking techniques, comprising but not limited to Wireless-Fidelity (Wi-Fi), wireless local access network (WLAN) techniques such as Institute of Electrical and Electronics Engineers (IEEE) 802.11, 802.16, and/or the like. In addition, these signals may include speech data, user generated data, user requested data, and/or the like. In this regard, the mobile terminal may be capable of operating with one or more air interface standards, communication protocols, modulation types, access types, and/or the like. More particularly, the mobile terminal 10 may be capable of operating in accordance with various first generation (1G), second generation (2G), 2.5G, third-generation (3G) communication protocols, fourth-generation (4G) communication protocols, Internet Protocol Multimedia Subsystem (IMS) communication protocols (*e.g*., session initiation protocol (SIP)), and/or the like. For example, the mobile terminal may be capable of operating in accordance with 2G wireless communication protocols IS-136 (Time Division Multiple Access (TDMA)), Global System for Mobile communications (GSM), IS-95 (Code Division Multiple Access (CDMA)), and/or the like. Also, for example, the mobile terminal may be capable of operating in accordance with 2.5G wireless communication protocols General Packet Radio Service (GPRS), Enhanced Data GSM Environment (EDGE), and/or the like. Further, for example, the mobile terminal may be capable of operating in accordance with 3G wireless communication protocols such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The mobile terminal may be additionally capable of operating in accordance with 3.9G wireless communication protocols such as Long Term Evolution (LTE) or Evolved Universal Terrestrial Radio Access Network (E-UTRAN) and/or the like. Additionally, for example, the mobile terminal may be capable of operating in accordance with fourth-generation (4G) wireless communication protocols and/or the like as well as similar wireless communication protocols that may be developed in the future.

Some Narrow-band Advanced Mobile Phone System (NAMPS), as well as Total Access Communication System (TACS), mobile terminals may also benefit from embodiments of this invention, as should dual or higher mode phones (*e.g*., digital/analog or TDMA/CDMA/analog phones). Additionally, the mobile terminal 10 may be capable of operating according to Wireless Fidelity (Wi-Fi) or Worldwide Interoperability for Microwave Access (WiMAX) protocols.

It is understood that the processor 20 may comprise circuitry for implementing audio/video and logic functions of the mobile terminal 10. For example, the processor 20 may comprise a digital signal processor device, a microprocessor device, an analog-to-digital converter, a digital-to-analog converter, and/or the like. Control and signal processing functions of the mobile terminal 10 may be allocated between these devices according to their respective capabilities. Further, the processor may comprise functionality to operate one or more software programs, which may be stored in memory. For example, the processor 20 may be capable of operating a connectivity program, such as a web browser. The connectivity program may allow the mobile terminal 10 to transmit and receive web content, such as location-based content, according to a protocol, such as Wireless Application Protocol (WAP), hypertext transfer protocol (HTTP), and/or the like. The mobile terminal 10 may be capable of using a Transmission Control Protocol/Internet Protocol (TCP/IP) to transmit and receive web content across the internet or other networks.

The mobile terminal 10 may also comprise a user interface including, for example, an earphone or speaker 24, a ringer 22, a microphone 26, a display 28, a user input interface, and/or the like, which may be operationally coupled to the processor 20. In this regard, the processor 20 may comprise user interface circuitry configured to control at least some functions of one or more elements of the user interface, such as, for example, the speaker 24, the ringer 22, the microphone 26, the display 28, and/or the like. The processor 20 and/or user interface circuitry comprising the processor 20 may be configured to control one or more functions of one or more elements of the user interface through computer program instructions (*e.g*., software and/or firmware) stored on a memory accessible to the processor 20 (*e.g.*, volatile memory 40, non-volatile memory 42, and/or the like). Although not shown, the mobile terminal may comprise a battery for powering various circuits related to the mobile terminal, for example, a circuit to provide mechanical vibration as a detectable output. The user input interface may comprise devices allowing the mobile terminal to receive data, such as a keypad 30, a touch display (not shown), a joystick (not shown), and/or other input device. In embodiments including a keypad, the keypad may comprise numeric (0-9) and related keys (#, *), and/or other keys for operating the mobile terminal.

The mobile terminal 10 may include a media capturing element, such as a camera, video and/or audio module, in communication with the processor 20. The media capturing element may comprise any means for capturing an image, video and/or audio for storage, display or transmission. For example, in an example embodiment in which the media capturing element comprises camera circuitry 36, the camera circuitry 36 may include a digital camera configured to form a digital image file from a captured image. In addition, the digital camera of the camera circuitry 36 may be configured to capture a video clip. As such, the camera circuitry 36 may include all hardware, such as a lens or other optical component(s), and software necessary for creating a digital image file from a captured image as well as a digital video file from a captured video clip. Alternatively, the camera circuitry 36 may include only the hardware needed to view an image, while a memory device of the mobile terminal 10 stores instructions for execution by the processor 20 in the form of software necessary to create a digital image file from a captured image. As yet another alternative, an object or objects within a field of view of the camera circuitry 36 may be displayed on the display 28 of the mobile terminal 10 to illustrate a view of an image currently displayed which may be captured if desired by the user. As such, a captured image may, for example, comprise an image captured by the camera circuitry 36 and stored in an image file. As another example, a captured image may comprise an object or objects currently displayed by a display or viewfinder of the mobile terminal 10, but not necessarily stored in an image file. In an example embodiment, the camera circuitry 36 may further include a processing element such as a co-processor configured to assist the processor 20 in processing image data and an encoder and/or decoder for compressing and/or decompressing image data. The encoder and/or decoder may encode and/or decode according to, for example, a joint photographic experts group (JPEG) standard, a moving picture experts group (MPEG) standard, or other format.

The mobile terminal 10 may comprise memory, such as a subscriber identity module (SIM) 38, a removable user identity module (R-UIM), and/or the like, which may store information elements related to a mobile subscriber. In addition to the SIM, the mobile terminal may comprise other removable and/or fixed memory. The mobile terminal 10 may include other non-transitory memory, such as volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices (*e.g*., hard disks, floppy disk drives, magnetic tape, etc.), optical disc drives and/or media, non-volatile random access memory (NVRAM), and/or the like. Like volatile memory 40 non-volatile memory 42 may include a cache area for temporary storage of data. The memories may store one or more software programs, instructions, pieces of information, data, and/or the like which may be used by the mobile terminal for performing functions of the mobile terminal. For example, the memories may comprise an identifier, such as an international mobile equipment identification (IMEI) code, capable of uniquely identifying the mobile terminal 10.

Returning to FIG. 1, in an example embodiment, the facial detection apparatus 102 includes various means for performing the various functions herein described. These means may comprise one or more of a processor 110, memory 112, communication interface 114, user interface 116, image capture circuitry 118, image search module 120, and/or authentication module 122. The means of the facial detection apparatus 102 as described herein may be embodied as, for example, circuitry, hardware elements (*e.g.,* a suitably programmed processor, combinational logic circuit, and/or the like), a computer program product comprising computer-readable program instructions (*e.g.,* software or firmware) stored on a computer-readable medium (*e.g.* memory 112) that is executable by a suitably configured processing device *(e.g.,* the processor 110), or some combination thereof.

The processor 110 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC or FPGA, or some combination thereof. Accordingly, although illustrated in FIG. 1 as a single processor, in some embodiments the processor 110 comprises a plurality of processors. The plurality of processors may be in operative communication with each other and may be collectively configured to perform one or more functionalities of the facial detection apparatus 102 as described herein. The plurality of processors may be embodied on a single computing device or distributed across a plurality of computing devices collectively configured to function as the facial detection apparatus 102. In embodiments wherein the facial detection apparatus 102 is embodied as a mobile terminal 10, the processor 110 may be embodied as or comprise the processor 20. In an example embodiment, the processor 110 is configured to execute instructions stored in the memory 112 or otherwise accessible to the processor 110. These instructions, when executed by the processor 110, may cause the facial detection apparatus 102 to perform one or more of the functionalities as described herein. As such, whether configured by hardware or software methods, or by a combination thereof, the processor 110 may comprise an entity capable of performing operations according to embodiments of the present invention while configured accordingly. Thus, for example, when the processor 110 is embodied as an ASIC, FPGA or the like, the processor 110 may comprise specifically configured hardware for conducting one or more operations described herein. Alternatively, as another example, when the processor 110 is embodied as an executor of instructions, such as may be stored in the memory 112, the instructions may specifically configure the processor 110 to perform one or more algorithms and operations described herein.

The memory 112 may comprise, for example, non-transitory memory, such as volatile memory, non-volatile memory, or some combination thereof. Although illustrated in FIG. 1 as a single memory, the memory 112 may comprise a plurality of memories. The plurality of memories may be embodied on a single computing device or may be distributed across a plurality of computing devices collectively configured to function as the facial detection apparatus 102. In various example embodiments, the memory 112 may comprise, for example, a hard disk, random access memory, cache memory, flash memory, a compact disc read only memory (CD-ROM), digital versatile disc read only memory (DVD-ROM), an optical disc, circuitry configured to store information, or some combination thereof. In embodiments wherein the facial detection apparatus 102 is embodied as a mobile terminal 10, the memory 112 may comprise the volatile memory 40 and/or the non-volatile memory 42. The memory 112 may be configured to store information, data, applications, instructions, or the like for enabling the facial detection apparatus 102 to carry out various functions in accordance with various example embodiments. For example, in at least some embodiments, the memory 112 is configured to buffer input data for processing by the processor 110. Additionally or alternatively, in at least some embodiments, the memory 112 is configured to store program instructions for execution by the processor 110. The memory 112 may store information in the form of static and/or dynamic information. The stored information may include, for example, models used for face detection, models used for facial authentication, images, videos, video frames, and/or the like. This stored information may be stored and/or used by the image capture circuitry 118 and/or image search module 120 during the course of performing their functionalities.

The communication interface 114 may be embodied as any device or means embodied in circuitry, hardware, a computer program product comprising computer readable program instructions stored on a computer readable medium (*e.g*., the memory 112) and executed by a processing device (*e.g.,* the processor 110), or a combination thereof that is configured to receive and/or transmit data to/from another computing device. For example, the communication interface 114 may be configured to receive data representing an image over a network. In this regard, in embodiments wherein the facial detection apparatus 102 comprises a server, network node, or the like, the communication interface 114 may be configured to communicate with a remote mobile terminal (*e.g.,* the remote terminal 304) to allow the mobile terminal and/or a user thereof to access facial detection functionality provided by the facial detection apparatus 102. In an example embodiment, the communication interface 114 is at least partially embodied as or otherwise controlled by the processor 110. In this regard, the communication interface 114 may be in communication with the processor 110, such as via a bus. The communication interface 114 may include, for example, an antenna, a transmitter, a receiver, a transceiver and/or supporting hardware or software for enabling communications with one or more remote computing devices. The communication interface 114 may be configured to receive and/or transmit data using any protocol that may be used for communications between computing devices. In this regard, the communication interface 114 may be configured to receive and/or transmit data using any protocol that may be used for transmission of data over a wireless network, wireline network, some combination thereof, or the like by which the facial detection apparatus 102 and one or more computing devices are in communication. The communication interface 114 may additionally be in communication with the memory 112, user interface 116, image capture circuitry 118, image search module 120, and/or authentication module 122, such as via a bus.

The user interface 116 may be in communication with the processor 110 to receive an indication of a user input and/or to provide an audible, visual, mechanical, or other output to a user. As such, the user interface 116 may include, for example, a keyboard, a mouse, a joystick, a display, a touch screen display, a microphone, a speaker, and/or other input/output mechanisms. In embodiments wherein the facial detection apparatus 102 is embodied as one or more servers, aspects of the user interface 116 may be reduced or the user interface 116 may even be eliminated. The user interface 116 may be in communication with the memory 112, communication interface 114, image capture circuitry 118, image search module 120, and/or authentication module 122, such as via a bus.

The image capture circuitry 118 may be embodied as various means, such as circuitry, hardware, a computer program product comprising computer readable program instructions stored on a computer readable medium (*e.g.,* the memory 112) and executed by a processing device (*e.g.,* the processor 110), or some combination thereof and, in one embodiment, is embodied as or otherwise controlled by the processor 110. In embodiments wherein the image capture circuitry 118 is embodied separately from the processor 110, the image capture circuitry 118 may be in communication with the processor 110. The image capture circuitry 118 may further be in communication with one or more of the memory 112, communication interface 114, user interface 116, image search module 120, and/or authentication module 122, such as via a bus.

The image capture circuitry 118 may comprise hardware configured to capture an image. In this regard, the image capture circuitry 118 may comprise a camera lens and/or other optical components for capturing a digital image. As another example, the image capture circuitry 118 may comprise circuitry, hardware, a computer program product, or some combination thereof that is configured to direct the capture of an image by a separate camera module embodied on or otherwise operatively connected to the facial detection apparatus 102. In embodiments wherein the facial detection apparatus 102 is embodied as a mobile terminal 10, the image capture circuitry 118 may comprise the camera circuitry 36. In embodiments wherein the facial detection apparatus 102 is embodied as one or more servers or other network nodes remote from a mobile terminal configured to provide an image or video to the facial detection apparatus 102 to enable the facial detection apparatus 102 to perform face detection on the image or video, aspects of the image capture circuitry 118 may be reduced or the image capture circuitry 118 may even be eliminated.

The image search module 120 may be embodied as various means, such as circuitry, hardware, a computer program product comprising computer readable program instructions stored on a computer readable medium (*e.g.,* the memory 112) and executed by a processing device (*e.g.,* the processor 110), or some combination thereof and, in one embodiment, is embodied as or otherwise controlled by the processor 110. In embodiments wherein the image search module 120 is embodied separately from the processor 110, the image search module 120 may be in communication with the processor 110. The image search module 120 may further be in communication with one or more of the memory 112, communication interface 114, user interface 116, image capture circuitry 118, and/or the authentication module 122, such as via a bus.

The authentication module 122 may be embodied as various means, such as circuitry, hardware, a computer program product comprising computer readable program instructions stored on a computer readable medium (*e.g.,* the memory 112) and executed by a processing device (*e.g.,* the processor 110), or some combination thereof and, in one embodiment, is embodied as or otherwise controlled by the processor 110. In embodiments wherein the authentication module 122 is embodied separately from the processor 110, the authentication module 122 may be in communication with the processor 110. The authentication module 122 may further be in communication with one or more of the memory 112, communication interface 114, user interface 116, image capture circuitry 118, and/or the image search module 120, such as via a bus.

An example facial detection apparatus 102 for recipient message authentication is configured to transmit and/or receive electronic messages such as by using the communications interface 114, the processor 110 or the like. In instances in which the facial detection apparatus 102 is configured to transmit a message, an image search module 120 may be activated to locate, request and/or capture an image of one or more intended recipients of the message. In instances in which the facial detection apparatus 102 is configured to receive a message, an authentication module 122 may be configured to ensure a user is authenticated as a recipient by using facial detection before allowing the user access to the message.

In some embodiments, the image search module 120 may be configured to locate an image of an intended recipient to an electronic message. For example the image search module 120 may search a local memory, such as memory 112 for an image that identifies the intended recipient. Alternatively or additionally, the image search module 120 may be configured to search, such as over a network, an intranet and/or the Internet for an image that identifies the intended recipient. In instances in which an image is discovered over a network, the image may be provided back to the sender to verify the correct person has been identified. Alternatively or additionally, the image search module 120 may also cause a message to be transmitted such as by the processor 110, the communication interface 114 and/or the like to request a current image of the intended recipients. In some embodiments, the message may be transmitted directly to the recipient. If in response to an image request, an image is received; such a received image may be approved and/or accepted by the sender prior to the transmission of the message that is to be authenticated.

The image search module 120, the processor 110, and/or the like may then be configured to cause the located image to be encoded for transmission with the message. In some embodiments, the image may be transmitted as an attachment and/or by other means that may result in the image be transferred to a recipient device. However in some embodiments, the encoded image may be transmitted to a remote device, such as a remote facial detection apparatus 302 as will be discussed with respect to Figure 3.

In some embodiments, the authentication module 122 may be configured to authenticate a recipient of a message. In an instance in which a message that is to be authenticated is received, the authentication module may be configured to cause an image to be captured of a user attempt to access the image, such as by using the image capture circuitry 118. The image in some embodiments may be captured automatically and/or may be captured based on a prompt such as a prompt over the user interface 116.

The authentication module 122 may then be configured to determine whether there is a match between the intended recipient in a received image and/or a received plurality of facial features and the user in the currently captured image. In some embodiments a match may occur in an instance in which the number of similar features are greater than or equal to a determined authentication threshold. In instances in which the recipient is authenticated then a decryption key may be received to enable a message to be accessed.

Alternatively or additionally, in instances in which the recipient is not authenticated, then the authentication module 122 may be configured to prompt the sender with the captured image of the recipient to allow the sender to determine if indeed it was the intended recipient. Alternatively or additionally, the authentication module 122 may also cause an additional image to be taken for further processing. In either case until a recipient is authenticated, the message may not be accessed.

Alternatively or additionally, the authentication module 122, the processor 110, or the like may be configured to alter a received message based on the authenticated identification of a recipient. For example based on the authenticated recipient, the processor 110, the authentication module 122 and/or the like may be configured to change a theme, text content, and/or the like in the received message.

As described in conjunction with the embodiment of FIG. 1, the mobile terminal may include the facial detection apparatus 102. However, the facial detection apparatus 102 may also be separated from and in communication with the mobile terminal. Further, FIG. 3 illustrates a system 300 for performing message recipient authentication according to an example embodiment of the invention. The system 300 comprises a facial detection apparatus 302 and a remote terminal 304 configured to communicate over the network 306. The facial detection apparatus 302 may, for example, comprise an embodiment of the facial detection apparatus 102 wherein the facial detection apparatus 102 is embodied as one or more servers, one or more network nodes, a cloud computing system and/or the like that is configured to provide recipient based message authentication services to a remote mobile terminal and/or user thereof. The remote terminal 304 may comprise any mobile terminal configured to access the network 306 and communicate with the facial detection apparatus 302 in order to access message recipient authentication that is provided by the facial detection apparatus 302. The remote terminal 304 may, for example, be embodied as a desktop computer, laptop computer, mobile terminal, mobile computer, mobile phone, mobile communication device, mobile terminal 10, game device, digital camera/camcorder, audio/video player, television device, radio receiver, digital video recorder, positioning device, any combination thereof, and/or the like. The network 306 may comprise a wireline network, wireless network (*e.g*., a cellular network, wireless local area network, wireless wide area network, some combination thereof, or the like), a direct communication link (*e.g*., Bluetooth, machine-to-machine communication or the like) or a combination thereof, and in one embodiment comprises the internet.

In the example system illustrated in FIG. 3, the facial detection apparatus 302 may be configured to receive an image, video clip, video frame, and/or the like sent by the remote terminal 304. The facial detection apparatus 302 (*e.g.,* image search module 120) may be configured to message recipient authentication on the received image, video clip, and/or video frame in accordance with any of the embodiments described herein below with respect to the facial detection apparatus 102. The facial detection apparatus 302 (*e.g.*, authentication module 122 and/or communication interface 114) may be further configured to transmit message recipient authentication results performed by the facial detection apparatus 302 to the remote terminal 304.

In another example embodiment of the system 300, aspects of the image search module 120 and the authentication module 122 may be distributed between the remote terminal 304 and facial detection apparatus 302. In this example embodiment, the facial detection apparatus 302 may handle some of the processing tasks required for performing message recipient authentication. In this regard, the remote terminal 304 may not be required to perform more computationally-intensive steps for performing message recipient authentication. In yet another example embodiment of the system 300, the remote terminal 304 and the facial detection apparatus 302 may be embodied by a single device such as is described with respect to FIGS. 1 and 2.

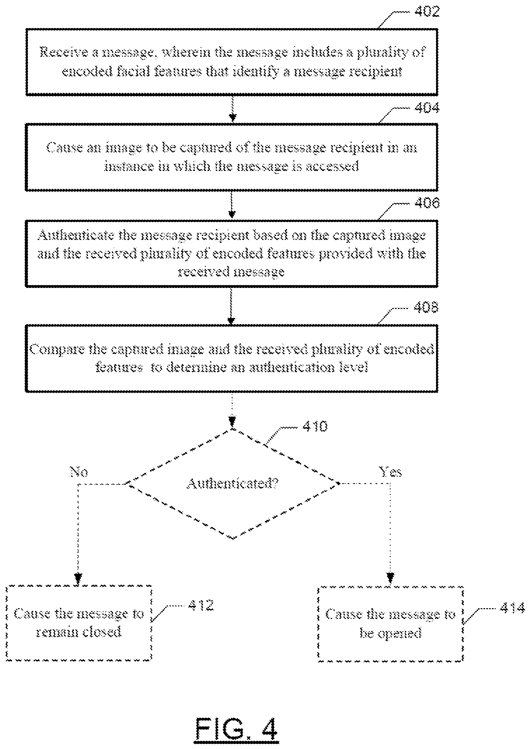

Figures 4-6 illustrate example flowcharts of the example operations performed by a method, apparatus and computer program product in accordance with one embodiment of the present invention. It will be understood that each block of the flowcharts, and combinations of blocks in the flowcharts, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory 112 of an apparatus employing an embodiment of the present invention and executed by a processor 110 in the apparatus. As will be appreciated, any such computer program instructions may be loaded onto a computer or other programmable apparatus (*e.g*., hardware) to produce a machine, such that the resulting computer or other programmable apparatus provides for implementation of the functions specified in the flowcharts' block(s). These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowcharts' block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowcharts' block(s). As such, the operations of Figures 4-6, when executed, convert a computer or processing circuitry into a particular machine configured to perform an example embodiment of the present invention. Accordingly, the operations of Figures 4-6 define an algorithm for configuring a computer or processing to perform an example embodiment. In some cases, a general purpose computer may be provided with an instance of the processor which performs the algorithms of Figures 4-6 to transform the general purpose computer into a particular machine configured to perform an example embodiment.

Accordingly, blocks of the flowchart support combinations of means for performing the specified functions and combinations of operations for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations herein may be modified or further amplified as described below. Moreover, in some embodiments additional optional operations may also be included. It should be appreciated that each of the modifications, optional additions or amplifications below may be included with the operations above either alone or in combination with any others among the features described herein.

FIG. 4 illustrates a flowchart according to an example method for performing recipient authentication at a recipient device according to an example embodiment of the invention. As shown in operation 402, the apparatus 102 may include means, such as the processor 110, the communications interface 114, or the like, for receiving a message. In some embodiments the message may include an encoding of a plurality of facial features that identify a message recipient. For example, the message may include an image, or some portion of an image that contains identifiable facial features and/or may include a listing of facial features. Alternatively or additionally the received message may provide an indication of a remote location (e.g. remote facial detection apparatus 302) that is currently configured to store the image and/or the plurality of facial features.

As is shown in operation 404, the apparatus 102 may include means, such as the processor 110, the image capture circuitry118, the authentication module 122, or the like, for causing an image to be captured of the message recipient in an instance in which the message is accessed. For example, a front facing camera, such as a camera that is facing a user while the user is looking at a display of the device, may be configured to capture an image of the user. In other embodiments, the user may be prompted to cause an image to be captured.

As is shown in operation 406, the apparatus 102 may include means, such as the processor 110, the authentication module 122, or the like, for authenticating the message recipient based on the captured image and the received plurality of encoded features provided with the received message. In order to authenticate the message recipient, as is shown in operation 408, the apparatus 102 may include means, such as the processor 110, the authentication module 122, or the like, for comparing the captured image and the received plurality of encoded features to determine an authentication level.

As is shown in decision block 410 the apparatus 102 may include means, such as the processor 110, the authentication module 122, or the like, for determining if the message recipient is authenticated. In an instance in which a number of similar features between the compared image and the received plurality of encoded features are greater than or equal to a predetermined authentication level, as is shown in operation 414, the apparatus 102 may include means, such as the processor 110, the authentication module 122, or the like, for causing the message to be opened and/or accessible. In an instance in which a number of similar features between the compared image and the received plurality of encoded features do not exceed a predetermined authentication level, as is shown in operation 412, the apparatus 102 may include means, such as the processor 110, the authentication module 122, or the like, for causing the message to remain closed and/or inaccessible.

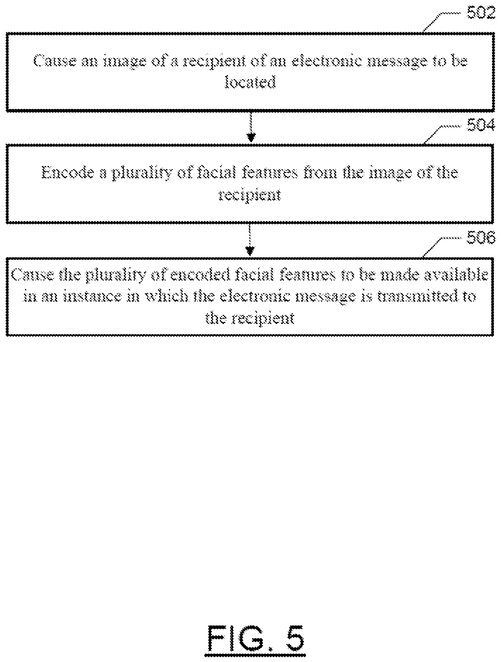

FIG. 5 illustrates a flowchart according to an example method for performing recipient authentication at a recipient device according to an example embodiment of the invention. As is shown in operation 502, the apparatus 102 may include means, such as the processor 110, the image search module 122, or the like, for causing an image of a recipient of an electronic message to be located. In an embodiment, the image search module 122 may determine whether an image stored in the memory 112 is related to the recipient of the electronic message and/or the image may be requested using the communications interface 114 from a remote storage, such as the remote facial detection apparatus 302. In some embodiments, a most recent image of the recipient may be chosen, in alternate embodiments other images may be chosen based on image quality and/or the like.

As is shown in operation 504, the apparatus 102 may include means, such as the processor 110, the image search module 122, or the like, for encoding a plurality of facial features from the image of the recipient. In some embodiments, the image, a partial image, and/or a listing of features found within an image may be transmitted. As is shown in operation 506, the apparatus 102 may include means, such as the processor 110, the communications interface 114, or the like, for causing the plurality of encoded facial features to be made available to the recipient in an instance in which the electronic message is transmitted to the recipient.

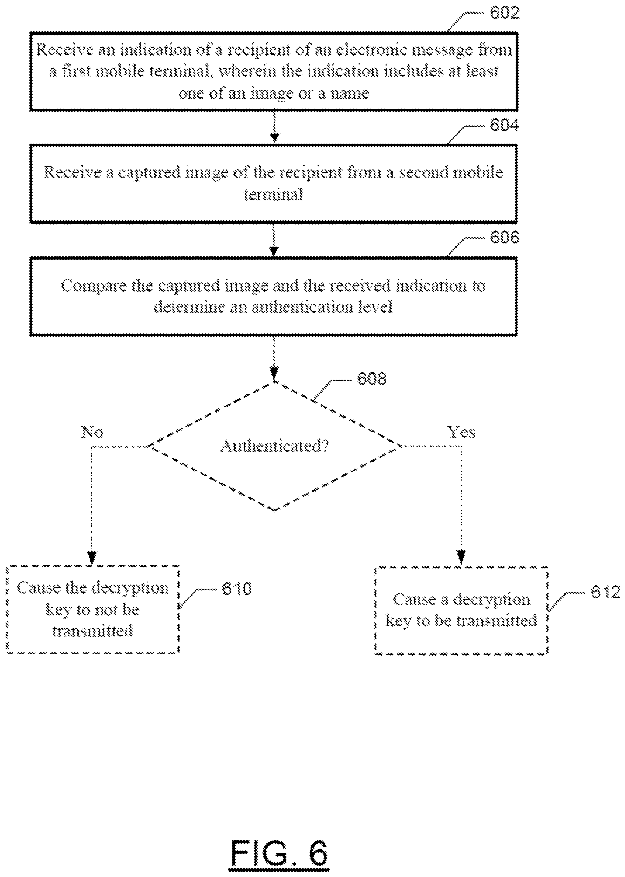

FIG. 6 illustrates a flowchart according to an example method for performing recipient authentication at a recipient device according to an example embodiment of the invention. As is shown in operation 602, the facial detection apparatus 302, may include means, such as the processor 110, the communications interface 114, the image search module 122, or the like, for receiving an indication of a recipient of an electronic message from a first mobile terminal, such as mobile terminal 10, wherein the indication includes at least one of an image or a name. In instances in which a name of a recipient is received, the facial detection apparatus 302 may attempt to locate an image of the recipient. See also operation 502 of Figure 5.

As is shown in operation 604, the facial detection apparatus 302, may include means, such as the processor 110, the communications interface 114, or the like, for receiving a captured image of the recipient from a second mobile terminal, such as mobile terminal 10. See also operation 404 of Figure 4. As is shown in operation 606, the facial detection apparatus 302, may include means, such as the processor 110, the authentication module 122, or the like, for comparing the captured image and the received plurality of encoded features to determine an authentication level.

As is shown in decision block 608 the facial detection apparatus 302 may include means, such as the processor 110, the authentication module 122, or the like, for determining if the message recipient is authenticated. In an instance in which a number of similar features between the compared image and the received plurality of encoded features greater than or equal to a predetermined authentication level, as is shown in operation 610, the facial detection apparatus 302 may include means, such as the processor 110, the authentication module 122, or the like, for causing a decryption key to be transmitted. In some embodiments the decryption key may be received from the sending mobile terminal, and/or may be created by the facial detection apparatus 302. In an instance in which a number of similar features between the compared image and the received plurality of encoded features do not exceed a predetermined authentication level, as is shown in operation 612, the facial detection apparatus 302 may include means, such as the processor 110, the authentication module 122, or the like, for causing the decryption key to not be transmitted.

Advantageously, example message authentication allows the message sender to have control over who reads a message. In some examples, the activation of a send button in a message application may activate the facial detection apparatus 102. Alternatively or additionally, a recipient may not know that authentication has been performed unless the example message authentication as described herein fails. Such processes advantageously allow for ease of use by allowing for authentication to occur at the receiving mobile terminal. In some embodiments, the authentication may be conducted remotely to conserve processing power at the receiving device.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving a message on a device (102), wherein the message includes a plurality of encoded facial features that identify an intended message recipient; automatically capturing an image of a message recipient attempting to access the received message by the device (102) as a response to the attempt of the message recipient to access the received message on the device (102); and
authenticating the message recipient by the device (102) based on the captured image and the received plurality of encoded facial features provided with the received message, if the image of the message recipient matches the received plurality of encoded facial features of the intended message recipient.

2. A method according to Claim 1, wherein authenticating the message recipient further comprises:
comparing the captured image and the received plurality of encoded features to determine an authentication level;
causing the message to be opened in an instance in which a number of similar features between the compared image and the received plurality of encoded features greater than or equal to a predetermined authentication level; and
causing the message to remain closed in an instance in which a number of similar features between the compared image and the received plurality of encoded features do not exceed a predetermined authentication level.

3. A method according to Claims 1 or 2 further comprises causing the plurality of facial features that identify a message recipient to be retrieved from a remote facial detection apparatus.

4. A method according to Claims 1 to 3, wherein authenticating the message recipient further comprises:
causing the received encoding of the plurality of facial features and the captured image to be transmitted to a remote facial detection module;
receiving an indication of whether the recipient is authenticated to open the received message; and
in an instance in which the recipient is authenticated causing the message to be opened.

5. A method according to Claims 1 to 4 further comprises receiving a message decryption key that is configured to open the message in an instance in which the recipient is authenticated.

6. A method according to Claims 1 to 5, wherein the method further comprises causing a front facing camera to be activated for capturing the image of the message recipient as a response to the attempt of the message recipient to access the received message on the device (102).

7. A method comprising:
causing an image of an intended recipient of an electronic message to be located;
encoding a plurality of facial features that identify the intended message recipient of the electronic message from the image of the intended message recipient and wherein the plurality of encoded facial features are included in the electronic message;
causing the plurality of encoded facial features to be made available on a device (102) of a message recipient in an instance in which the electronic message is transmitted to the intended recipient and an image is automatically captured of the message recipient attempting to access the electronic message by the device (102) as a response to the attempt of the message recipient to access the received message on the device (102), wherein the plurality of encoded facial features are arranged to be used for authenticating the message recipient by the device (102) based on the captured image of the message recipient attempting to access the electronic message and the plurality of encoded features provided with the electronic message, if the image of the message recipient matches the received plurality of encoded facial features of the intended message recipient.

8. A method according to Claim 7, wherein causing the image of the intended recipient of an electronic message to be located further comprises at least one of:
determining whether an image stored in the memory (112) is related to the intended recipient of the electronic message; and
causing an image of the intended recipient of the electronic message to be requested from a remote facial detection apparatus (122).

9. A method according to Claims 7 and 8, wherein causing the plurality of encoded facial features to be made available in an instance in which the electronic message is transmitted to the recipient further comprises at least one of:
causing the plurality of encoded facial features to be transmitted with the electronic message:
and
causing the plurality of encoded facial features to be transmitted to a remote facial detection apparatus.

10. An apparatus comprising means for performing the actions of the method according to any of claims 1 to 6

11. A computer program code configured to realize the actions of the method or any of claims 1 to 6, when executed by a processor (110).

## Patentansprüche

1. Verfahren, umfassend:
Empfangen einer Mitteilung auf einer Einrichtung (102), wobei die Mitteilung eine Vielzahl von kodierten Gesichtsmerkmalen aufweist, die einen vorgesehenen Mitteilungsempfänger identifizieren;
automatisches Aufnehmen eines Bilds eines Mitteilungsempfängers, der versucht, auf die empfangene Mitteilung zuzugreifen, durch die Einrichtung (102) in Reaktion auf den Versuch des Mitteilungsempfängers, auf die auf der Einrichtung (102) empfangene Mitteilung zuzugreifen; und
Authentifizieren des Mitteilungsempfängers durch die Einrichtung (102) auf der Basis des aufgenommenen Bilds und der empfangenen Vielzahl von kodierten Gesichtsmerkmalen, die mit der empfangenen Mitteilung geliefert werden, wenn das Bild des Mitteilungsempfängers mit der empfangenen Vielzahl von kodierten Gesichtsmerkmalen des vorgesehenen Mitteilungsempfängers übereinstimmt.

2. Verfahren nach Anspruch 1, wobei das Authentifizieren des Mitteilungsempfängers ferner Folgendes umfasst:
Vergleichen des aufgenommenen Bilds und der empfangenen Vielzahl von kodierten Merkmalen zum Bestimmen eines Authentifizierungslevels;
Bewirken, dass die Mitteilung in einem Fall geöffnet wird, in dem eine Anzahl von im Wesentlichen gleichen Merkmalen zwischen dem verglichenen Bild und der empfangenen Vielzahl von kodierten Merkmalen größer als ein vorbestimmter oder gleich einem vorbestimmten Authentifizierungslevel ist; und
Bewirken, dass die Mitteilung in einem Fall geschlossen bleibt, in dem die Anzahl von im Wesentlichen gleichen Merkmalen zwischen dem verglichenen Bild und der empfangenen Vielzahl von kodierten Merkmalen einen vorbestimmten Authentifizierungslevel nicht übersteigt.

3. Verfahren nach Anspruch 1 oder 2, das ferner das Bewirken umfasst, dass die Vielzahl von Gesichtsmerkmalen, die einen Mitteilungsempfänger identifizieren, aus einer Fern-Gesichtsdetektionsvorrichtung abgerufen wird.

4. Verfahren nach Anspruch 1 bis 3, wobei das Authentifizieren des Mitteilungsempfängers ferner Folgendes umfasst:
Bewirken, dass die empfangene Kodierung der Vielzahl von Gesichtsmerkmalen und das aufgenommene Bild zu einem Fern-Gesichtsdetektionsmodul übertragen werden;
Empfangen einer Anzeige, ob der Empfänger zum Öffnen der empfangenen Mitteilung authentifiziert worden ist; und
in einem Fall, in dem der Empfänger authentifiziert worden ist, Bewirken, dass die Mitteilung geöffnet wird.

5. Verfahren nach Anspruch 1 bis 4, das ferner das Empfangen eines Mitteilungsentschlüsselungs-Schlüssels umfasst, der so ausgeführt ist, dass er die Mitteilung in einem Fall öffnet, in dem der Empfänger authentifiziert worden ist.

6. Verfahren nach Anspruch 1 bis 5, wobei das Verfahren ferner das Bewirken umfasst, dass eine vordere Kamera zum Aufnehmen des Bilds des Mitteilungsempfängers in Reaktion auf den Versuch des Mitteilungsempfängers, auf die auf der Einrichtung (102) empfangene Mitteilung zuzugreifen, aktiviert wird.

7. Verfahren, umfassend:
Bewirken, dass ein Bild eines vorgesehenen Empfängers einer elektronischen Mitteilung lokalisiert wird;
Kodieren einer Vielzahl von Gesichtsmerkmalen, die den vorgesehenen Mitteilungsempfänger der elektronischen Mitteilung identifizieren, aus dem Bild des vorgesehenen Mitteilungsempfängers und wobei die Vielzahl von kodierten Gesichtsmerkmalen in der elektronischen Mitteilung enthalten ist;
Bewirken, dass die Vielzahl von kodierten Gesichtsmerkmalen eines Mitteilungsempfängers auf einer Einrichtung (102) in einem Fall zur Verfügung gestellt wird, in dem die elektronische Mitteilung zu dem vorgesehenen Mitteilungsempfänger übertragen wird und ein Bild des Mitteilungsempfängers, der versucht, auf die elektronische Mitteilung zuzugreifen, in Reaktion auf den Versuch des Mitteilungsempfängers, auf die empfangene Mitteilung auf der Einrichtung (102) zuzugreifen, von der Einrichtung (102) automatisch aufgenommen wird, wobei die Vielzahl von kodierten Gesichtsmerkmalen so angeordnet ist, dass sie zur Authentifizierung des Mitteilungsempfängers durch die Einrichtung (102) auf der Basis des aufgenommenen Bilds des Mitteilungsempfängers, der versucht, auf die elektronische Mitteilung zuzugreifen, und der Vielzahl von kodierten Merkmalen, die mit der elektronischen Mitteilung geliefert wird, verwendet wird, wenn das Bild des Mitteilungsempfängers mit der empfangenen Vielzahl von kodierten Gesichtsmerkmalen des vorgesehenen Mitteilungsempfängers übereinstimmt.

8. Verfahren nach Anspruch 7, wobei das Bewirken, dass das Bild des vorgesehenen Empfängers einer elektronischen Mitteilung lokalisiert wird, ferner mindestens eines umfasst von:
Bestimmen, ob ein Bild, das in dem Speicher (112) gespeichert ist, auf den vorgesehenen Empfänger der elektronischen Mitteilung bezogen ist; und
Bewirken, dass ein Bild des vorgesehenen Empfängers der elektronischen Mitteilung aus einer Fern-Gesichtsdetektionsvorrichtung (122) angefordert wird.

9. Verfahren nach Anspruch 7 und 8, wobei das Bewirken, dass die Vielzahl von kodierten Gesichtsmerkmalen in einem Fall zur Verfügung gestellt wird, in dem die elektronische Mitteilung an den Empfänger übertragen wird, ferner mindestens eines umfasst von:
Bewirken, dass die Vielzahl von kodierten Gesichtsmerkmalen mit der elektronischen Mitteilung übertragen wird; und
Bewirken, dass die Vielzahl von kodierten Gesichtsmerkmalen zu einer Fern-Gesichtsdetektionsvorrichtung übertragen wird.

10. Vorrichtung, die ein Mittel zum Durchführen der Schritte des Verfahrens nach einem der Ansprüche 1 bis 6 umfasst.

11. Computerprogrammcode, der so ausgeführt ist, dass er die Schritte des Verfahrens nach einem der Ansprüche 1 bis 6 realisiert, wenn er von einem Prozessor (110) ausgeführt wird.

## Revendications

1. Procédé comprenant les étapes suivantes :
recevoir un message sur un dispositif (102), dans lequel le message comprend une pluralité de caractéristiques faciales codées qui identifient un destinataire de message prévu ;
capturer automatiquement une image d'un destinataire de message tentant d'accéder au message reçu par le dispositif (102) en réponse à la tentative du destinataire du message d'accéder au message reçu sur le dispositif (102) ; et
authentifier le destinataire du message par le dispositif (102) sur la base de l'image capturée et de la pluralité reçue de caractéristiques faciales codées fournies avec le message reçu, si l'image du destinataire du message correspond à la pluralité reçue de caractéristiques faciales codées du destinataire prévu du message.

2. Procédé selon la revendication 1, dans lequel authentifier le destinataire du message comprend les étapes suivantes :
comparer l'image capturée et la pluralité reçue de caractéristiques codées pour déterminer un niveau d'authentification ;
faire en sorte que le message soit ouvert dans une instance dans laquelle un certain nombre de caractéristiques similaires entre l'image comparée et la pluralité reçue de caractéristiques codées est supérieur ou égal à un niveau d'authentification prédéterminé ; et
faire en sorte que le message reste fermé dans une instance dans laquelle un certain nombre de caractéristiques similaires entre l'image comparée et la pluralité reçue de fonctionnalités codées ne dépasse pas un niveau d'authentification prédéterminé.

3. Procédé selon la revendication 1 ou la revendication 2 comprenant en outre de faire en sorte que la pluralité de caractéristiques faciales qui identifient un destinataire de message soit récupérée auprès d'un appareil distant de détection de visage.

4. Procédé selon les revendications 1 à 3, dans lequel authentifier le destinataire du message comprend en outre les étapes suivantes :
faire en sorte que le codage reçu de la pluralité de caractéristiques faciales et l'image capturée soient transmises à un module distant de détection de visage ; recevoir une indication indiquant si le destinataire est authentifié pour ouvrir le message reçu ; et
dans une instance dans laquelle le destinataire est authentifié, faire en sorte que le message soit ouvert.

5. Procédé selon les revendications 1 à 4, comprenant en outre de recevoir une clé de déchiffrement de message qui est configurée pour ouvrir le message dans une instance dans laquelle le destinataire est authentifié.

6. Procédé selon les revendications 1 à 5, dans lequel le procédé comprend en outre de faire en sorte qu'une caméra frontale soit activée pour capturer l'image du destinataire du message en réponse à la tentative du destinataire du message d'accéder au message reçu sur le dispositif (102).

7. Procédé comprenant les étapes suivantes :
faire en sorte qu'une image d'un destinataire prévu d'un message électronique soit localisé ;
coder une pluralité de caractéristiques faciales qui identifient le destinataire prévu de message du message électronique à partir de l'image du destinataire prévu du message, et où la pluralité de caractéristiques faciales codées sont incluses dans le message électronique ;
faire en sorte que la pluralité de caractéristiques faciales codées soit mise à disposition sur un dispositif (102) d'un destinataire de message dans une instance dans laquelle le message électronique est transmis au destinataire prévu et que soit automatiquement capturée une image du destinataire du message tentant d'accéder au message électronique par le dispositif (102) en réponse à la tentative du destinataire du message d'accéder au message reçu sur le dispositif (102), où la pluralité de caractéristiques faciales codées est agencée pour être utilisée pour authentifier le destinataire du message par le dispositif (102) sur la base de l'image capturée du destinataire du message tentant d'accéder au message électronique et de la pluralité de caractéristiques codées fournie avec le message électronique, si l'image du destinataire du message correspond à la pluralité reçue de caractéristiques faciales codées du destinataire prévu du message.

8. Procédé selon la revendication 7, dans lequel faire en sorte que l'image du destinataire prévu d'un message électronique soit localisée comprend en outre au moins une des étapes suivantes :
déterminer si une image stockée dans la mémoire (112) est en relation avec le destinataire prévu du message électronique ; et
faire en sorte qu'une image du destinataire prévu du message électronique soit demandée auprès d'un appareil distant de détection de visage (122).

9. Procédé selon les revendications 7 et 8, dans lequel faire en sorte que la pluralité de caractéristiques faciales codées soit mise à disposition dans une instance dans laquelle le message électronique est transmis au destinataire comprend en outre au moins l'une des étapes suivantes :
faire en sorte que la pluralité de caractéristiques faciales codées soit transmise avec le message électronique : et
faire en sorte que la pluralité de caractéristiques faciales codées soit transmise à un appareil distant de détection de visage.

10. Appareil comprenant des moyens pour exécuter les actions du procédé selon l'une quelconque des revendications 1 à 6.

11. Code de programme informatique configuré pour réaliser les actions du procédé ou de l'une quelconque des revendications 1 à 6, lorsqu'elles sont exécutées par un processeur (110).
